# EUROPÄISCHE PATENTSCHRIFT

(11) **EP 4 035 342 B1**
(45) Veröffentlichungstag und Bekanntmachung des Hinweises auf die Patenterteilung: **05.11.2025**
(21) Anmeldenummer: 20780121.8
(22) Anmeldetag: 21.09.2020
(51) Int. Cl.: H04L 61/45, G06F 16/28

(54) **VERFAHREN ZUM BEREITSTELLEN UND VALIDIEREN ALTERNATIVER OBJEKTBEZEICHNER SOWIE ZUM ERMITTELN VON REFERENZEN ALTERNATIVER OBJEKTBEZEICHNER INNERHALB EINER OPC-UA-BASIERENDEN KOMMUNIKATIONSUMGEBUNG**
METHODS FOR PROVIDING AND VALIDATING ALTERNATIVE OBJECT IDENTIFIERS AND FOR DETERMINING REFERENCES OF ALTERNATIVE OBJECT IDENTIFIERS WITHIN AN OPC-UA-BASED COMMUNICATION ENVIRONMENT
PROCÉDÉS POUR FOURNIR ET VALIDER DES IDENTIFIANTS D'OBJETS ALTERNATIFS ET POUR DÉTERMINER DES RÉFÉRENCES D'IDENTIFIANTS D'OBJETS ALTERNATIFS DANS UN ENVIRONNEMENT DE COMMUNICATION BASÉ SUR OPC-UA

(30) Priorität: 25.09.2019 LU 101410
(43) Veröffentlichungstag der Anmeldung: 03.08.2022
(73) Patentinhaber: PHOENIX CONTACT GMBH & CO. KG, 32825 Blomberg (DE)
(72) Erfinder: THEIS, Oliver, 32689 Kalletal (DE)
(74) Vertreter: Blumbach · Zinngrebe Patentanwälte PartG mbB
(86) Internationale Anmeldenummer: PCT/EP2020/076224
(87) Internationale Veröffentlichungsnummer: WO 2021/058414

(56) Entgegenhaltungen:
- "IEC 62541-3 ED3: OPC unified architecture - Part 3: Address Space Model", 17 August 2018 (2018-08-17), pages 1 - 109, XP082013178, Retrieved from the Internet <URL:http://www.iec.ch/cgi-bin/restricted/getfile.pl/65E_601e_CDV.pdf?dir=65E&format=pdf&type=_CDV&file=601e.pdf> [retrieved on 20180817]
- "IEC 62541-6 ED3: OPC unified architecture - Part 6: Mappings", 17 August 2018 (2018-08-17), pages 1 - 101, XP082013166, Retrieved from the Internet <URL:http://www.iec.ch/cgi-bin/restricted/getfile.pl/65E_607e_CDV.pdf?dir=65E&format=pdf&type=_CDV&file=607e.pdf> [retrieved on 20180817]
- "OPC Unified Architecture", 19 March 2009, ISBN: 978-3-54-068898-3, article WOLFGANG MAHNKE: "OPC Unified Architecture", pages: 1 - 339, XP055160132
- "IEC TR 62541-1 ED3: OPC unified architecture - Part 1: Overview and concepts", 13 September 2019 (2019-09-13), pages 1 - 26, XP082018777, Retrieved from the Internet <URL:https://www.iec.ch/cgi-bin/restricted/getfile.pl/65E_678e_DTR.pdf?dir=65E&format=pdf&type=_DTR&file=678e.pdf> [retrieved on 20190913]

## Beschreibung

Die vorliegende Erfindung betrifft ein Verfahren zum Bereitstellen alternativer Objektbezeichner für Objekte eines Adressraums eines Servers innerhalb einer OPC-UA-basierenden Kommunikationsumgebung, ein Verfahren zum Validieren solcher alternativen Objektbezeichner sowie ein Verfahren zum Ermitteln von Referenzen solcher alternativer Objektbezeichner. Die Erfindung betrifft einen Server, ein System und ein Computerprogrammprodukt, welche ausgebildet sind zur Durchführung wenigstens eines dieser Verfahren.

IEC 62541 ist ein mehrteiliger Standard für die OPC Unified Architecture (OPC UA), welcher z.B. Protokolle für die sogenannte Machine-to-Machine (M2M) Kommunikation definiert, also für den automatisierten Informationsaustausch zwischen Endgeräten wie Maschinen oder Automaten.

OPC-UA unterliegt einem Client-Server-Modell, d. h. Server stellen Informationen zur Verfügung, die Clients von den Servern abfragen. Die Funktionalität eines Servers wird den Clients anhand sogenannter Services verfügbar gemacht. Ein Service ermöglicht den Zugriff auf bestimmte Serveraspekte mittels für den jeweiligen Service definierter Anfrage- und Antwortnachrichten (request/response), die zwischen dem Client und dem Server ausgetauscht werden. Dabei werden die Informationen von einem Server den Clients in einem Adressraum des Servers bereitgestellt.

Teil 3 des IEC 62541 Standards ("Address Space Model") definiert ein objektorientiertes Konzept eines Adressraumes, insbesondere gemäß der zum Anmeldetag gültigen Version, wobei gemäß Teil 4 des Standards ("Services"), insbesondere gemäß der zum Anmeldetag gültigen Version, Objekte durch Knoten (nodes) repräsentiert werden. Knoten haben zum einen Attribute und zum anderen Referenzen, welche auf andere Knoten zeigen und die Kanten eines gerichteten Graphen repräsentieren, so dass es Vorwärts- und Rückwärtsreferenzen geben kann.

Clients in einer UPC-UA-basierenden Kommunikationsumgebung können einen solchen durch einen Server bereitgestellten Adressraum durchsuchen (browse), um ausgehend von einem bekannten Wurzelknoten den eindeutigen Bezeichner eines anderen Knotens (nachfolgend auch NodeID genannt) zu ermitteln. Mittels der spezifizierten Dienste (services) wie "DataAccess" erhalten OPC-UA-Clients beispielsweise lesenden oder schreibenden Zugriff auf Attributwerte eines Knotens eines Adressraums.

NodeIDs setzen sich in der Regel aus den drei Elementen "namespaceIndex", "identifierType" und "identifier" zusammen. Das Element "identifierType" definiert den Typ des eindeutigen Bezeichners, welcher NUMERIC, STRING, GUID oder BYTESTRING sein kann. Für die Eindeutigkeit jeder NodeID muss jedem Knoten des Adressraums (address space) als Element "identifier" ein eindeutiger Identifikator gemäß des definierten Bezeichnertyps festgelegt sein. Um Adress- bzw. Bezeichnerkollisionen zu vermeiden und den Adressraum weiter zu unterteilen, kann ein Adressraum mehrere Namensräume (name space) umfassen. Als Element "namespaceIndex" der NodeID muss für jeden Knoten des Adressraums der jeweilige Namensraum des Knotens angegeben sein. Ein Verzeichnis aller Namensräume bzw. Namensraumindizies eines Adressraums ist als Attribut zu einem bekannten Knoten wie dem Wurzelknoten hinterlegt.

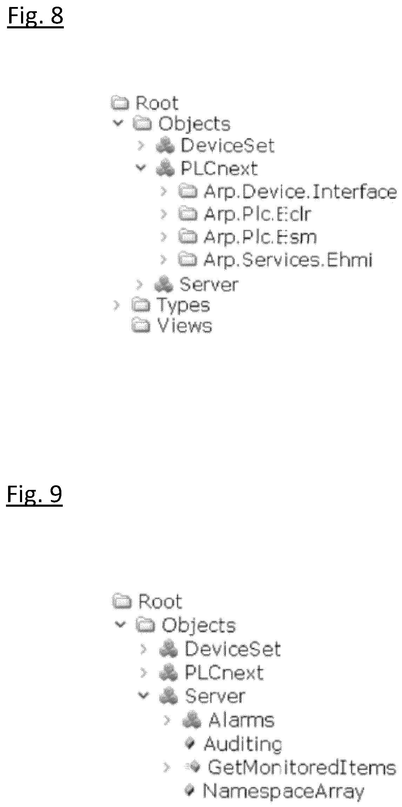

Eine mögliche Anwendung eines OPC-UA-Servers ist es zum Beispiel im Bereich der Automatisierungstechnik, OPC-UA-Clients den Zugriff auf Variablen einer speicherprogrammierbaren Steuerung (programmable logic control, PLC) bereitzustellen. Beispielsweise werden bei Steuerungen auf Basis der PLCnext Technology der Anmelderin die Variablen der Komponenten als Knoten eines Adressraumes eines OPC-UA-Servers aufgeführt, wobei für die eindeutigen Knotenbezeichner der Bezeichnertyp STRING festgelegt ist (vgl. Figur 8). Das Verzeichnis aller Namensräume bzw. Namensraumindizies des Adressraums ist als Attribut "NamespaceArray" des Knotens "Server" hinterlegt (vgl. Figur 9).

Problematisch wurde es bisher aber, wenn für den selben Datenbestand eines OPC-UA-Adressraums mehrere Informationsmodelle wie zum Beispiel verschiedene semantische Repräsentationen insbesondere dynamisch implementiert werden sollten oder im Laufe der Zeit Änderungen im Adressraum vorgenommen werden sollten, die Auswirkungen auf bestehende NodeIDs hatten.

Die bereits erwähnten Namensräume erlauben zwar eine Strukturierung eines Adressraums. Sie sind aber statischer Natur und würden ein Replizieren von Knoten bzw. Knoteninstanzen in einen anderen Namensraum erfordern, um für den selben Datenbestand eines OPC-UA-Adressraums mehrere Informationsmodelle zu implementieren.

Das Konzept der OPC-UA-Sichten (views) erlaub zwar das Organisieren und Zuschneiden von Adressräumen auf spezifische Aufgaben und Anwendungsfälle. Sie dienen aber eher als Einstiegspunkte oder Filter für einen Adressraum. Eine Aufgabe der vorliegenden Erfindung liegt somit darin, eine Möglichkeit zur Beseitigung wenigstens eines der genannten Nachteile anzugeben.

Als Lösung schlägt die Erfindung ein Verfahren mit den Merkmalen des unabhängigen Patentanspruchs 1, ein Verfahren mit den Merkmalen des unabhängigen Patentanspruchs 2 sowie ein Verfahren mit den Merkmalen des unabhängigen Patentanspruchs 3 vor. Ferner schlägt die Erfindung einen Server gemäß des unabhängigen Patentanspruchs 4, ein System gemäß des unabhängigen Patentanspruchs 5 sowie ein Computerprogrammprodukt gemäß des unabhängigen Patentanspruchs 6 vor.

Weitere vorteilhafte Ausgestaltungen der erfindungsgemäßen Steuerungsanordnung sind in den abhängigen Patentansprüchen angegeben.

Der Erfindung liegt die Idee zugrunde, durch ein neues Adressierungsschema, welches insbesondere zusätzlich zum herkömmlichen Adressierungsschema implementiert werden kann, mehrere verschiedene Repräsentationen desselben Datenbestands eines OPC-UA-Adressraums zu ermöglichen. Dies erlaubt verschiedene Informationsmodelle und insbesondere den Zugriff auf Objekte bzw. Knoten in verschiedenen Kontexten. Das neue Adressierungsschema basiert auf alternativen Objektbezeichnern, welche im Wesentlichen die bestehenden herkömmlichen Objektbezeichner mit einem Zusatzbezeichner kombinieren, wobei der alternative Bezeichner als Repräsentant, Alias oder Synonym des herkömmlichen Bezeichners eines Objekts bzw. Knotens zu verstehen ist. Ein wesentlicher Vorteil der Erfindung, welcher später noch näher erläutert wird, ist dabei, dass ein OPC-UA-Server zur Implementierung dieses neuen Adressierungsschemas im Wesentlichen keine zusätzlichen Rechen- oder Speicherressourcen benötigt.

Bei den erfindungsgemäßen Verfahren können die Objekte durch Knoten repräsentiert sein, so dass es sich bei den Objektbezeichnern um Knotenbezeichner (NodeIDs) handelt. Ferner kann ein Adressraum in Namensräume unterteilt sein, wobei das jeweilige Verfahren für die Objekte bzw. Knoten eines Namensraums oder mehrerer, insbesondere aller, Namensräume eines Adressraums angewandt bzw. ausgeführt werden kann.

Vorteilhaft ist dabei, dass ein Anwender die alternativen Objektbezeichner als solche klar erkennen und von den herkömmlichen Objektbezeichnern einfach unterscheiden kann. Die alternativen Objektbezeichner bieten eine große Flexibilität hinsichtlich im Laufe der Zeit gegebenenfalls erforderlicher Änderungen im Adressraum, wie die Vergabe neuer Bezeichner für bestehende Objekte bzw. Knoten, denn solche Änderungen wirken sich Dank des neuen Adressierungsschemas nicht auf die herkömmlichen, sondern nur auf die alternativen Objekt- bzw. Knotenbezeichner aus. Von Vorteil ist dabei außerdem, dass die alternativen Objektbezeichner aus OPC-UA-Protokollsicht gleich behandelt werden können wie die herkömmlichen Objektbezeichner.

Das Schema gibt vor, dass wenn der herkömmliche Objektbezeichner vom Bezeichnertyp STRING ist, der Zusatzbezeichner ebenfalls vom Bezeichnertyp STRING ist und zwei Zusatzbezeichnerteile umfasst, wobei der erste Zusatzbezeichnerteil eine frei definierbare Zeichenkette ist und der zweite Zusatzbezeichnerteil ein frei definierbares Separatorzeichen ist.

Das Schema gibt vor, dass der alternative Objektbezeichner ebenfalls vom Bezeichnertyp STRING ist und aus den drei Teilen erster Zusatzbezeichnerteil, zweiter Zusatzbezeichnerteil und herkömmlicher Objektbezeichner des jeweiligen Objekts in dieser oder umgekehrter Kombinationsreihenfolge gebildet wird.

Somit ist das neue Adressierungsschema sehr einfach implementierbar für Adressräume mit herkömmlichen Objektbezeichnern vom Bezeichnertyp STRING.

Das Schema gibt weiterhin vor, dass wenn der herkömmliche Objektbezeichner vom Bezeichnertyp NUMERIC ist, der Zusatzbezeichner ebenfalls vom Bezeichnertyp NUMERIC und ein Vielfaches eines Basiswertes ist, wobei der Basiswert größer ist als der um 1 erhöhte größte numerische Wert unter allen herkömmlichen Objektbezeichnern der Objekte des Adressraums des Servers.

Das Schema gibt weiterhin vor, dass der alternative Objektbezeichner ebenfalls vom Bezeichnertyp NUMERIC ist und durch Addieren des Zusatzbezeichners und des herkömmlichen Objektbezeichners des jeweiligen Objekts gebildet wird. In diesem Fall entspricht also der alternative Objektbezeichner der Summe der numerischen Werte des Zusatzbezeichners und des herkömmlichen Objektbezeichners.

Somit ist das neue Adressierungsschema ebenfalls sehr einfach implementierbar für Adressräume mit herkömmlichen Objektbezeichnern vom Bezeichnertyp NUMERIC.

Da die Anfrage eines OPC-UA-Clients grundsätzlich irgendeinen Objektbezeichner enthalten könnte, muss zunächst, seitens des OPC-UA-Server, validiert werden, dass der angefragte alternative Objektbezeichner tatsächlich ein gültiger ist, indem validiert wird, dass der darin enthaltene Zusatzbezeichner gültig ist und der darin enthaltene herkömmliche Objektbezeichner tatsächlich Teil des Adressraums ist.

Gemäß einer ersten Ausbildung des Verfahrens gibt das Schema vor, dass wenn der alternative Objektbezeichner vom Bezeichnertyp STRING ist, als Teilungskriterium ein Separatorzeichen verwendet wird und das Separatorzeichen innerhalb der gesamten Zeichenkette des alternativen Objektbezeichners als zweiter Zusatzsbezeichnerteil identifiziert wird, und wobei der Teil der Zeichenkette vor dem Separatorzeichen als erster Zusatzbezeichnerteil und der Teil der Zeichenkette nach dem Separatorzeichen als herkömmlicher Objektbezeichner identifiziert und weiterverarbeitet wird oder der Teil der Zeichenkette vor dem Separatorzeichen als herkömmlicher Objektbezeichner und der Teil der Zeichenkette nach dem Separatorzeichen als erster Zusatzbezeichnerteil identifiziert und weiterverarbeite wird.

Gemäß einer anderen Ausbildung des Verfahrens gibt das Schema vor, dass wenn der alternative Objektbezeichner vom Bezeichnertyp NUMERIC ist, als Teilungskriterium ein Basiswert verwendet wird und der alternative Objektbezeichner durch den Basiswert dividiert wird, wobei der Ganzzahlquotient dieser Division, insbesondere nach erneuter Multiplikation mit dem Basiswert Base als Zusatzbezeichner und der Rest dieser Division als herkömmlicher Objektbezeichner identifiziert und weiterverarbeitet wird.

Somit können angefragte Objektbezeichner vom Bezeichnertyp STRING aber auch vom Bezeichnertyp NUMERIC validiert werden.

Wenn der alternative Objektbezeichner vom Bezeichnertyp STRING ist, kann der als Teilungskriterium zum Teilen des alternativen Objektbezeichners zu verwendende Separator zum Beispiel im Quellcode festgelegt sein, insbesondere im Quellcode für einen sogenannten NodeID-Parser. Alternativ kann das zu verwendende Teilungskriterium zum Beispiel auch als ein konfigurierbarer Parameter eingerichtet sein.

Auch wenn der alternative Objektbezeichner vom Bezeichnertyp NUMERIC ist, kann die als Teilungskriterium zum Teilen des alternativen Objektbezeichners zu verwendende Basis zum Beispiel im Quellcode festgelegt sein, insbesondere im Quellcode für einen sogenannten NodeID-Parser. Dabei sollte der Wert der Basis möglichst groß gewählt sein, so dass eine Überlappung der NodeIDs verschiedener Informationsmodelle eines Namensraums möglichst unwahrscheinlich ist. OPC UA spezifiziert UINT32 als Datentyp für numerische NodeIDs, so dass als maximaler Wert der Basis (2^32-1)/Y gewählt werden kann, wobei Y die maximal mögliche Anzahl verschiedener Dimensionen bzw. Informationsmodelle angibt. Soll hingegen der Wert der Basis minimal klein festgelegt sein, muss die maximale Anzahl der Nodes im Adressraum bekannt sein und beachtet werden. Alternativ kann das zu verwendende Teilungskriterium zum Beispiel auch als ein konfigurierbarer Parameter eingerichtet sein.

Wenn der alternative Objektbezeichner vom Bezeichnertyp STRING ist, kann ein Verzeichnis der definierten Zusatzbezeichner zum Beispiel als Liste oder Array im Quellcode festgelegt sein, insbesondere im Quellcode für einen sogenannten NodeID-Parser.

Auch wenn der alternative Objektbezeichner vom Bezeichnertyp NUMERIC ist, kann ein Verzeichnis der definierten Zusatzbezeichner zum Beispiel als Liste oder Array im Quellcode festgelegt sein, insbesondere im Quellcode für einen sogenannten NodeID-Parser.

Die Anfrage eines OPC-UA-Clients kann darauf gerichtet sein zu einem angefragten alternativen Objektbezeichner die Referenzen zu ermitteln. Dieses Verfahren erzeugt für jede ermittelte Referenz einen alternativen Objektbezeichner unter Verwendung des in dem angefragten alternativen Objektbezeichner enthaltenen Zusatzbezeichners. Bei der Beantwortung der Anfrage wird also das vom Client verwendete Informationsmodell berücksichtigt. Dabei ist das Verfahren vorteilhafter Weise sowohl für Vorwärtsreferenzen als auch für Rückwärtsreferenzen anwendbar bzw. ausführbar. Gemäß einer ersten Ausbildung des Verfahrens gibt das Schema vor, dass wenn der alternative Objektbezeichner, dessen Referenzen zu ermitteln sind, vom Bezeichnertyp STRING ist, als Teilungskriterium ein Separatorzeichen verwendet wird und das Separatorzeichen innerhalb der Zeichenkette des alternativen Objektbezeichners als zweiter Zusatzsbezeichnerteil identifiziert wird,
und wobei der Teil der Zeichenkette vor dem Separatorzeichen als erster Zusatzbezeichnerteil und der Teil der Zeichenkette nach dem Separatorzeichen als herkömmlicher Objektbezeichner identifiziert und weiterverarbeitet wird
oder der Teil der Zeichenkette vor dem Separatorzeichen als herkömmlicher Objektbezeichner und der Teil der Zeichenkette nach dem Separatorzeichen als erster Zusatzbezeichnerteil identifiziert und weiterverarbeite wird.

Gemäß des Verfahrens gibt das Schema vor, dass für jede ermittelte Referenz der alternative Objektbezeichner ebenfalls vom Bezeichnertyp STRING ist und aus drei Teilen gebildet wird
und zwar in der Reihenfolge erster Zusatzbezeichnerteil, zweiter Zusatzbezeichnerteil und herkömmlicher Objektbezeichner des jeweiligen zugeordneten anderen Objekts
oder in der Reihenfolge herkömmlicher Objektbezeichner des jeweiligen zugeordneten anderen Objekts, zweiter Zusatzbezeichnerteil und erster Zusatzbezeichnerteil.

Gemäß einer anderen Ausbildung des Verfahrens gibt das Schema vor, dass wenn der alternative Objektbezeichner, dessen Referenzen zu ermitteln sind, vom Bezeichnertyp NUMERIC ist, als Teilungskriterium ein Basiswert verwendet wird und der alternative Objektbezeichner durch den Basiswert dividiert wird, wobei der Ganzzahlquotient dieser Division, insbesondere_nach erneuter Multiplikation mit dem Basiswert Base, als Zusatzbezeichner und der Rest dieser Division als herkömmlicher Objektbezeichner weiterverarbeitet wird.

Gemäß des Verfahrens gibt das Schema vor, dass für jede ermittelte Referenz der alternative Objektbezeichner ebenfalls vom Bezeichnertyp NUMERIC ist und durch Addieren des Zusatzbezeichners und des herkömmlichen Objektbezeichners des jeweiligen zugeordneten anderen Objekts gebildet wird.

Somit können für angefragte Objektbezeichner vom Bezeichnertyp STRING aber auch vom Bezeichnertyp NUMERIC effektiv Referenzen ermittelt werden.

Vorgeschlagen wird ferner ein Server, insbesondere OPC-UA-Server, welcher zur Durchführung wenigsten eines der zuvor beschriebenen erfindungsgemäßen Verfahren ausgebildet ist. Vorgeschlagen wird zudem ein System umfassend eine OPC-UA-basierende Kommunikationsumgebung mit wenigstens einem erfindungsgemäßen Server wie zuvor beschrieben und mit wenigstens einem Client, welche über ein Netzwerk miteinander verbunden sind.

Vorgeschlagen wird schließlich auch ein Computerprogrammprodukt, umfassend Anweisungen, die bei Ausführung durch einen Computer, insbesondere einen Server, diesen veranlassen, wenigstens eines der zuvor beschriebenen erfindungsgemäßen Verfahren auszuführen.

Die zu den erfindungsgemäßen Verfahren einschließlich deren Ausführungen und Weiterbildungen angegebenen Merkmale und Vorteile gelten sinngemäß auch für den erfindungsgemäßen Server sowie für das System und das Computerprogrammprodukt.

Diese und weitere Merkmale und Vorteile der vorliegenden Erfindung ergeben sich auch aus den Ausführungsbeispielen, welche nachfolgend unter Bezugnahme auf die beiliegenden Zeichnungen näher erläutert werden. In schematischer Darstellung zeigt dabei
- Figur 1: ein System mit einer OPC-UA-basierenden Kommunikationsumgebung;
- Figur 2: ein erstes Beispiel eines Verfahrens zum Bereitstellen eines alternativen Objektbezeichners;
- Figur 3: ein erstes Beispiel eines Verfahrens zum Validieren eines alternativen Objektbezeichners;
- Figur 4: ein erstes Beispiel eines Verfahrens zum Ermitteln von Referenzen eines alternativen Objektbezeichners;
- Figur 5: ein zweites Beispiel eines Verfahrens zum Bereitstellen eines alternativen Objektbezeichners;
- Figur 6: ein zweites Beispiel eines Verfahrens zum Validieren eines alternativen Objektbezeichners;
- Figur 7: ein zweites Beispiel eines Verfahrens zum Ermitteln von Referenzen eines alternativen Objektbezeichners;
- Figur 8: einen Adressraum eines OPC-UA-Servers, worin die Komponentenvariablen einer Steuerung als Knoten mit eindeutigen Knotenbezeichner des Bezeichnertyp STRING aufgeführt sind;
- Figur 9: einen Adressraum eines OPC-UA-Servers, worin das Verzeichnis aller Namensräume bzw. Namensraumindizies des Adressraums als Attribut "NamespaceArray" des Knotens "Server" hinterlegt ist;
- Figur 10: ein erstes Beispiel einer Auflistung von herkömmlichen Objektbezeichnern und alternativen Objektbezeichnern für Objekte bzw. Knoten eines Adressraums, welche Variablen der Steuerungskomponente "Arp.PLC.Eclr" in unterschiedlichen Informationsmodellen repräsentieren;
- Figur 11: ein zweites Beispiel einer Auflistung von herkömmlichen Objektbezeichnern und alternativen Objektbezeichnern für Objekte bzw. Knoten eines Adressraums, welche Variablen der Steuerungskomponente "Arp.PLC.Eclr" in unterschiedlichen Informationsmodellen repräsentieren.

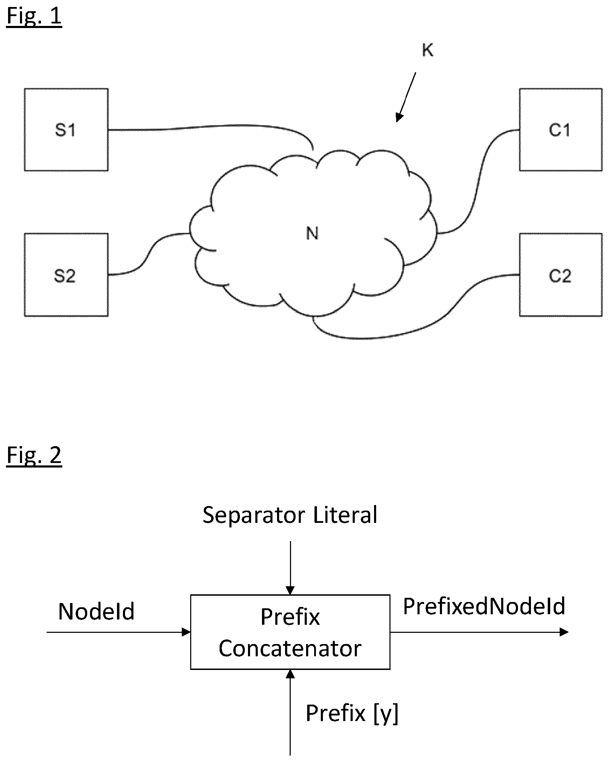

Figur 1 zeigt beispielhaft ein System mit einer OPC-UA-basierenden Kommunikationsumgebung K, welches hier zwei Server S1 und S2 sowie zwei Clients C1 und C2 aufweist, welche über ein Netzwerk N miteinander verbunden sind. Dabei sind die Clients als OPC-UA-Clients und die Server als OPC-UA-Server ausgebildet. Die Server sind zudem zur Durchführung der erfindungsgemäßen Verfahren zur Bereitstellung, Validierung und Ermittlung von Referenzen alternativer Objektbezeichner ausgebildet, wobei die einzelnen Verfahren im Folgenden noch näher erläutert werden. Die Server S1 und S2 stellen Ihre Informationen den Clients C1 und C2 in einem Adressraum bereit.

Die Figur 8 zeigt beispielhaft einen Teil des Adressraums des OPC-UA-Servers S1. Darin sind die Komponentenvariablen einer nicht dargestellten Steuerung der PLCnext Technology, mit der zumindest der Server S1 in Verbindung steht, als Knoten mit eindeutigen herkömmlichen Knotenbezeichnern des Bezeichnertyps STRING aufgeführt. Figur 9 zeigt einen anderen Teil des Adressraums des OPC-UA-Servers S1, wobei hier erkennbar ist, dass das Verzeichnis aller Namensräume bzw. Namensraumindizies des Adressraums als Attribut "NamespaceArray" des Knotens "Server" hinterlegt ist.

Der OPC-UA-Standard spezifiziert nicht, wie ein Server die Knoten zu verwalten hat. Es sei angenommen, dass der Adressraum in Namensräume N[x] unterteilt ist, wobei die herkömmlichen Knotenbezeichner NodeID in einem Namensraum N[x] vom Bezeichnertyp identifierType = STRING oder identifierType = NUMERIC sind. Es sei ferner angenommen, dass der Server eine als NodeIDArray bezeichnete Arrayartige Struktur nutzt, um valide Knotenbezeichner NodeID zu speichern, und eine als Forward-/BackwardReferenceMap bezeichnete Kartenartige Struktur nutzt, um Referenzen zu speichern, d. h. Arrays von Knotenbezeichnern NodeIDs der Referenzen zu jedem Knotenbezeichner NodeID. Diese Annahmen wurden jedoch nur zur Vereinfachung der Beschreibung der Erfindung getroffen, jedoch nicht zur Einschränkung der Erfindung.

Die Erfindung zielt darauf ab, einen bestehenden Adressraum, insbesondere innerhalb eines Namensraums N[x], um eine Dimension y mit y = 1 ... Y zu erweitern, und zwar bei geringen Kosten bzw. bei geringem Aufwand, d.h. ohne Replizierung von Knoteninstanzen in einem Speicher, insbesondere ohne neue Elemente zum NodeIDArray oder zur Forward-/BackwardReferenceMap hinzuzufügen. Somit ermöglicht die Erfindung das Implementieren Y zusätzlicher Informatinsmodelle bzw. Kontexte für einen Datenbestand.

Hierzu schlägt die Erfindung ein neues, eingangs bereits erwähntes Adressierungsschema vor.

Im Fall eines herkömmlichen Knotenbezeichners NodeID vom Bezeichnertyp identifierType = STRING in einem Namensraum N[x] wird dabei ein neuer bzw. alternativer Knotenbezeichner PrefixedNodeID desselben Bezeichnertyps definiert, welcher wie in Figur 2 gezeigt gebildet wird durch die Kombination bzw. Verkettung (vgl. Prefix Concatenator) eines ersten Teils eines Zusatzbezeichners Prefix[y] und eines zweiten Teils eines Zusatzbezeichners in Form eines Separators Literal mit dem herkömmlichen Knotenbezeichner NodeID, wobei Prefix[y] ein Element der Menge Prefix[Y] mit dem Index y = 1:Y ist.

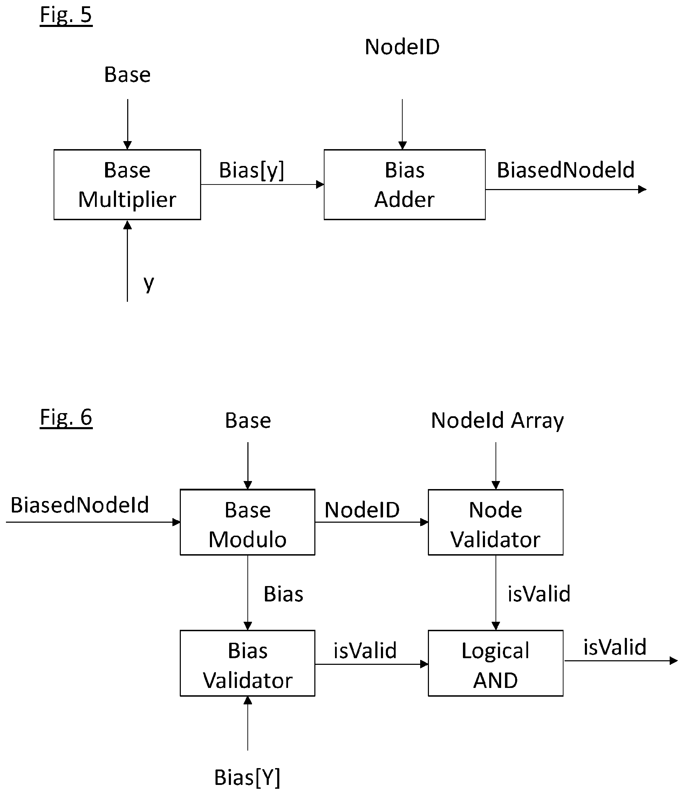

Im Fall eines herkömmlichen Knotenbezeichners NodeID vom Bezeichnertyp identifierType = NUMERIC in einem Namensraum N[x] wird ein neuer bzw. alternativer Knotenbezeichner BiasedNodeID desselben Bezeichnertyps definiert, welcher wie in Figur 5 gezeigt gebildet wird durch die Kombination bzw. Addition (vgl. Bias Adder) eines Zusatzbezeichners Bias[y] und des herkömmlichen Knotenbezeichners NodeID, wobei Bias[y] ein Element der Menge Bias[Y] mit dem Index y = 1:Y ist, und wobei Bias[y] das Produkt der Multiplikation eines Basiswerts Base mit y ist (vgl. Base Multiplier), wobei der Basiswert Base größer ist als der um 1 erhöhte größte numerische Wert unter allen herkömmlichen Knotenbezeichnern NodeID in dem Namensraum N[x].

Wenn beispielsweise der Namensraum N[x] 10 Knoten mit den Knotenbezeichnern NodeID = 1 ... 9 umfasst, so kann der Basiswert Base = 100 sein, da 100 > max (0 ... 9) gilt, so dass sich für Y = 3 alternative Knotenbezeichner Biased NodeID = (100 ... 109, 200 ... 209, 300 ... 309) ergeben.

Allgemein ausgedrückt ist somit ein Verfahren zum Bereitstellen alternativer Objektbezeichner für Objekte eines Adressraums, insbesondere eines Namensraums, eines Servers S1, S2 innerhalb einer OPC-UA-basierenden Kommunikationsumgebung K vorgesehen, wobei jedes Objekt des Adressraums des Servers S1, S2 durch einen herkömmlichen Objektbezeichner eindeutig bezeichnet, wobei wenigstens ein Zusatzbezeichner definiert und in einem Verzeichnis der für diesen Adressraum des Servers S1, S2 definierten Zusatzbezeichner gespeichert wird, und wobei für jedes Objekt des Adressraums des Servers S1, S2 ein das Objekt ebenfalls eindeutig bezeichnender alternativer Objektbezeichner gebildet wird, indem der Zusatzbezeichner mit dem herkömmlichen Objektbezeichner des jeweiligen Objekts nach einem bestimmten Schema kombiniert wird.

In einer ersten Ausbildung des Verfahrens gibt das Schema vor, dass wenn der herkömmliche Objektbezeichner vom Bezeichnertyp STRING ist, der Zusatzbezeichner ebenfalls vom Bezeichnertyp STRING ist und zwei Zusatzbezeichnerteile umfasst, wobei der erste Zusatzbezeichnerteil eine frei definierbare Zeichenkette ist und der zweite Zusatzbezeichnerteil ein frei definierbares Separatorzeichen ist. Außerdem gibt das Schema vor, dass der alternative Objektbezeichner ebenfalls vom Bezeichnertyp STRING ist und aus den drei Teilen erster Zusatzbezeichnerteil, zweiter Zusatzbezeichnerteil und herkömmlicher Objektbezeichner des jeweiligen Objekts in dieser Kombinationsreihenfolge gebildet wird (vgl. Figur 2).

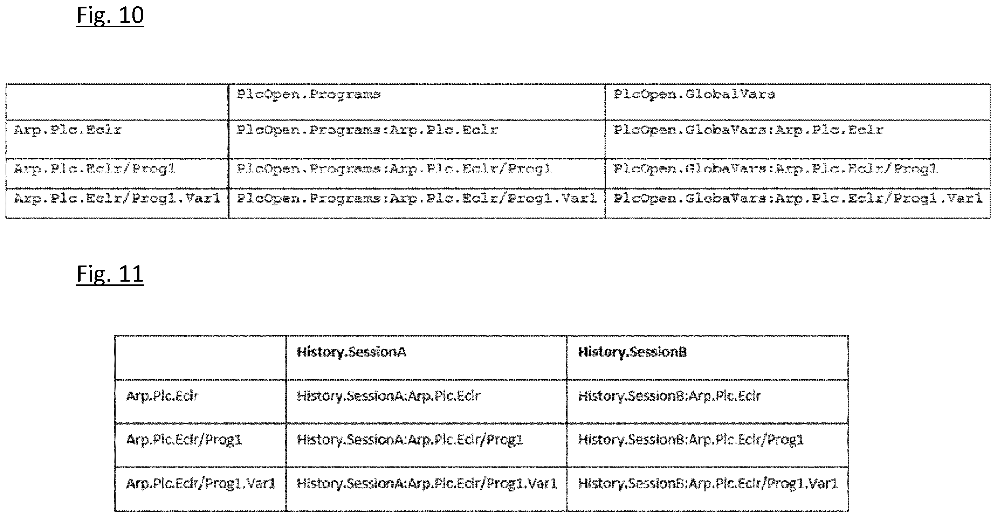

Beispielhafte Ergebnisse dieses Verfahrens sind in den Figuren 10 und 11 dargestellt.

Zu sehen ist in Figur 10 eine Auflistung von herkömmlichen Objektbezeichnern und alternativen Objektbezeichnern für Objekte bzw. Knoten eines Adressraums, welche Variablen der Steuerungskomponente "Arp.PLC.Eclr" in unterschiedlichen Informationsmodellen repräsentieren. Zum einen wurde der Zusatzbezeichner "PlcOpen.Programs" definiert, um ein Informationsmodell für Programmvariablen bereitzustellen. Zum anderen wurde der Zusatzbezeichner "PlcOpen.GlobalVars" definiert, um ein Informationsmodell für globale Variablen bereitzustellen. In beiden Fällen umfasst der Zusatzbezeichner zudem das Separatorzeichen ":".

In Figur 11 ist eine weitere Auflistung von herkömmlichen Objektbezeichnern und alternativen Objektbezeichnern für Objekte bzw. Knoten eines Adressraums zu sehen, welche Variablen der Steuerungskomponente "Arp.PLC.Eclr" in nochmals anderen Informationsmodellen repräsentieren. Zum einen wurde hier der Zusatzbezeichner "History.SessionA" definiert, für ein Informationsmodell zum Zugriff auf historische Werte dieser Variablen, welche in einer Session A mit einer ersten Samplingrate erfasst wurden. Zum anderen wurde der Zusatzbezeichner "History.SessionB" definiert, für ein Informationsmodell zum Zugriff auf historische Werte dieser Variablen, welche in einer Session B mit einer zweiten Samplingrate erfasst wurden. In beiden Fällen umfasst der Zusatzbezeichner zudem wieder das Separatorzeichen ":".

In den Beispielen gemäß der Figuren 2, 10 und 11 ist der Zusatzbezeichner als Prefix zum herkömmlichen Objektbezeichner vorgesehen. Denkbar wäre aber auch, den Zusatzbezeichner als Suffix zum herkömmlichen Objektbezeichner vorzusehen.

In einer alternativen Ausbildung des Verfahrens gibt das Schema vor, dass wenn der herkömmliche Objektbezeichner vom Bezeichnertyp NUMERIC ist, der Zusatzbezeichner ebenfalls vom Bezeichnertyp NUMERIC und ein Vielfaches eines Basiswertes ist, wobei der Basiswert größer ist als der um 1 erhöhte größte numerische Wert unter allen herkömmlichen Objektbezeichnern der Objekte des Adressraums des Servers S1, S2. Außerdem gibt das Schema vor, dass der alternative Objektbezeichner ebenfalls vom Bezeichnertyp NUMERIC ist und durch Addieren des Zusatzbezeichners und des herkömmlichen Objektbezeichners des jeweiligen Objekts gebildet wird (vgl. Figur 5).

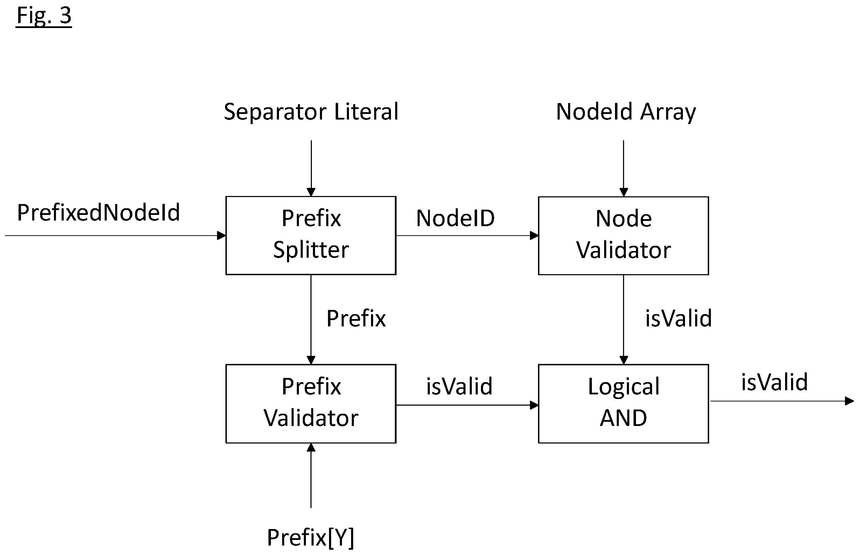

Die Figuren 3 und 6 zeigen zwei Beispiele eines Verfahrens zum Validieren eines alternativen Objektbezeichners innerhalb einer OPC-UA-basierenden Kommunikationsumgebung K, wobei jedes Objekt eines Adressraums eines Servers S1, S2 durch einen herkömmlichen Objektbezeichner eindeutig bezeichnet ist und zusätzlich durch wenigstens einen alternativen Objektbezeichner eindeutig bezeichnet ist. Im Allgemeinen umfasst das Verfahren die Schritte:
- Entnehmen eines alternativen Objektbezeichners PrefixedNodeID bzw. BiasedNodeID aus einer Anfrage eines Clients C1, C2,
- Teilen des Elements "Bezeichner" des alternativen Objektbezeichners nach einem bestimmten Schema unter Anwendung eines Teilungskriteriums, so dass anschließend ein herkömmlicher Objektbezeichner NodeID und ein Zusatzbezeichner Prefix bzw. Bias vorliegen,
- Beurteilen des herkömmlichen Objektbezeichners NodeID als valide, wenn er in einem Verzeichnis NodeIDArray der in diesem Adressraum des Servers S1, S2 vorhandenen herkömmlichen Objektbezeichner ermittelt werden kann (vgl. Node Validator),
- Beurteilen des Zusatzbezeichners als valide, wenn er in einem Verzeichnis Prefix[Y] bzw. Bias[Y] der für diesen Adressraum des Servers S1, S2 definierten Zusatzbezeichner ermittelt werden kann (vgl. Prefix Validator bzw. Bias Validator),
- Beurteilen des alternativen Objektbezeichners als valide, wenn zuvor sowohl der herkömmliche Objektbezeichner als auch der Zusatzbezeichner als valide beurteilt wurden (vgl. Logical AND),
- Beurteilen des alternativen Objektbezeichners als nicht valide, wenn zuvor der herkömmliche Objektbezeichner und/oder der Zusatzbezeichner als nicht valide beurteilt wurden.

Gemäß einer ersten Ausbildung des Verfahrens (vgl. Figur 3) gibt das Schema vor, dass wenn der alternative Objektbezeichner vom Bezeichnertyp STRING ist, als Teilungskriterium ein Separatorzeichen Literal verwendet wird und das Separatorzeichen innerhalb der gesamten Zeichenkette des alternativen Objektbezeichners PrefixedNodeID als zweiter Zusatzsbezeichnerteil identifiziert wird, wobei der Teil der Zeichenkette vor dem Separatorzeichen als erster Zusatzbezeichnerteil Prefix und der Teil der Zeichenkette nach dem Separatorzeichen als herkömmlicher Objektbezeichner NodeID identifiziert und weiterverarbeitet wird (vgl. Prefix Splitter).

In einem nicht in den Figuren gezeigten Fall könnte stattdessen vorgesehen sein, dass der Teil der Zeichenkette vor dem Separatorzeichen als herkömmlicher Objektbezeichner und der Teil der Zeichenkette nach dem Separatorzeichen als erster Zusatzbezeichnerteil identifiziert und weiterverarbeitet wird.

Gemäß einer anderen Ausbildung des Verfahrens (vgl. Figur 6) gibt das Schema vor, dass wenn der alternative Objektbezeichner vom Bezeichnertyp NUMERIC ist, als Teilungskriterium ein Basiswert Base verwendet wird und der alternative Objektbezeichner BiasedNodeID durch den Basiswert Base dividiert wird, wobei der Ganzzahlquotient dieser Division, insbesondere nach erneuter Multiplikation mit dem Basiswert Base, als Zusatzbezeichner Bias und der Rest dieser Division als herkömmlicher Objektbezeichner NodeID identifiziert und weiterverarbeitet wird (vgl. Base Modulo). In der Figur 6 ist die erneute Multiplikation des Ganzzahlquotienten mit dem Basiswert Base nicht gezeigt. Der Ganzzahlquotient an sich, entspricht dem Index y der Dimension bzw. des Informationsmodells.

Aufgrund dieser erfindungsgemäßen stufenweisen Validierung, kann die Validierung alternativer Objektbezeichner sehr effizient erfolgen. Und da bei der erfindungsgemäßen Bereitstellung alternativer Objektbezeichner für ein zusätzliches Informationsmodell lediglich ein neuer Zusatzbezeichner in das Verzeichnis der Zusatzbezeichner eingetragen wird, jedoch keine Knoteninstanzen repliziert werden, erfordert die Validierung alternativer Objektbezeichner kaum zusätzlichen Bedarf an Speicherplatz und Rechenleistung bzw. Rechenzeit. Somit ermöglicht die Erfindung das Implementieren Y zusätzlicher Informationsmodelle bzw. Kontexte für einen Datenbestand, ohne dass dadurch der Bedarf an Speicherplatz und Rechenleistung bzw. Rechenzeit um den Faktor Y+1 steigen würde.

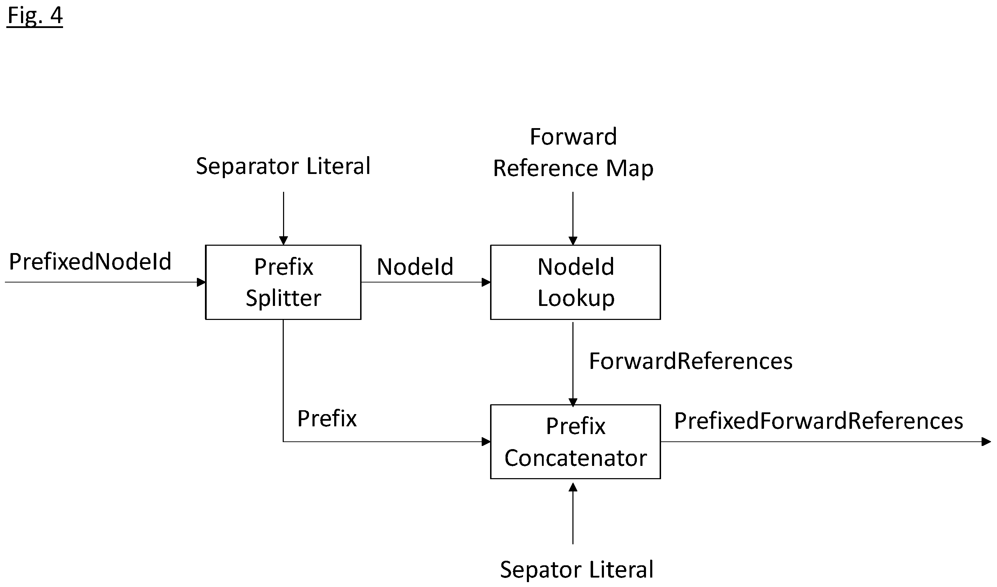

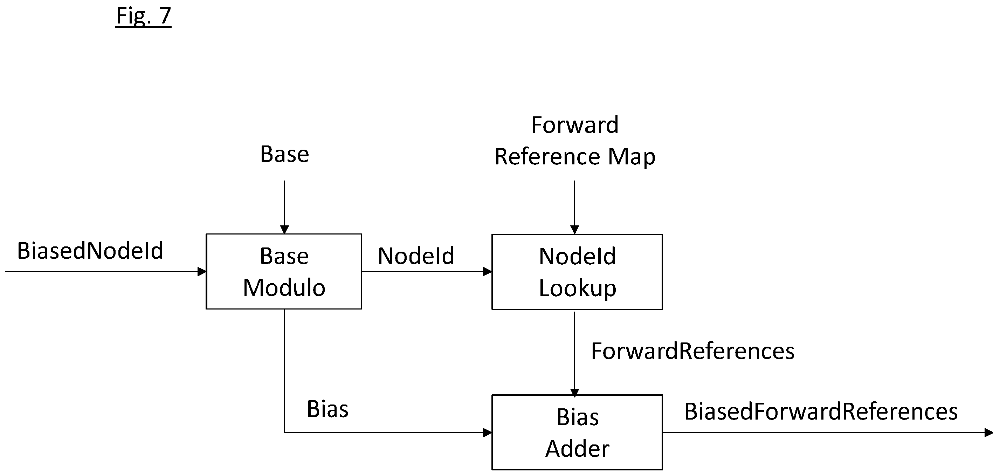

Die Figuren 4 und 7 zeigen zwei Beispiele eines Verfahrens zum Ermitteln von Referenzen eines alternativen Objektbezeichners innerhalb einer OPC-UA-basierenden Kommunikationsumgebung K, wobei jedes Objekt eines Adressraums eines Servers S1, S2 durch einen herkömmlichen Objektbezeichner eindeutig bezeichnet ist und zusätzlich durch wenigstens einen alternativen Objektbezeichner eindeutig bezeichnet ist. Im Allgemeinen umfasst das Verfahren die Schritte:
- Entnehmen eines alternativen Objektbezeichners PrefixedNodeID bzw. BiasedNodeID aus einer Anfrage eines Clients C1, C2,
- Teilen des Elements "Bezeichner" des alternativen Objektbezeichners nach einem bestimmten Schema unter Anwendung eines Teilungskriteriums, so dass anschließend ein herkömmlicher Objektbezeichner NodeID und ein Zusatzbezeichner Prefix bzw. Bias vorliegen,
- Ermitteln der dem herkömmlichen Objektbezeichner NodeID zugeordneten Referenzen in einem Verzeichnis ForwardReferenceMap der in diesem Adressraum des Servers S1, S2 vorhandenen Referenzen, wobei jede Referenz einen herkömmlichen Objektbezeichner eines zugeordneten anderes Objekts umfasst (vgl. NodeID Lookup),
- für jede ermittelte Referenz ForwardReferences Bilden eines alternativen Objektbezeichners PrefixedForwardReferences bzw. BiasedForwardReferences durch Kombinieren des Zusatzbezeichners Prefix bzw. Bias mit dem von der Referenz ForwardReferences umfassten herkömmlichen Objektbezeichner des zugeordneten anderen Objekts nach einem bestimmten Schema (vgl. Prefix Concatenator bzw. Bias Adder).

Gemäß einer ersten Ausbildung des Verfahrens (vgl. Figur 4) gibt das Schema vor, dass wenn der alternative Objektbezeichner PrefixedNodeID, dessen Referenzen zu ermitteln sind, vom Bezeichnertyp STRING ist, als Teilungskriterium ein Separatorzeichen Literal verwendet wird und das Separatorzeichen innerhalb der Zeichenkette des alternativen Objektbezeichners als zweiter Zusatzsbezeichnerteil identifiziert wird,
und wobei der Teil der Zeichenkette vor dem Separatorzeichen als erster Zusatzbezeichnerteil Prefix und der Teil der Zeichenkette nach dem Separatorzeichen als herkömmlicher Objektbezeichner NodeID identifiziert und weiterverarbeitet wird.

In einem nicht in den Figuren gezeigten Fall könnte stattdessen vorgesehen sein, dass der Teil der Zeichenkette vor dem Separatorzeichen als herkömmlicher Objektbezeichner und der Teil der Zeichenkette nach dem Separatorzeichen als erster Zusatzbezeichnerteil identifiziert und weiterverarbeitet wird.

Weiterhin gibt das Schema vor, dass für jede ermittelte Referenz ForwardReferences der alternative Objektbezeichner PrefixedForwardReferences ebenfalls vom Bezeichnertyp STRING ist und aus drei Teilen gebildet wird
und zwar in der Reihenfolge erster Zusatzbezeichnerteil Prefix, zweiter Zusatzbezeichnerteil Separator Literal und herkömmlicher Objektbezeichner des jeweiligen zugeordneten anderen Objekts oder in der Reihenfolge herkömmlicher Objektbezeichner des jeweiligen zugeordneten anderen Objekts, zweiter Zusatzbezeichnerteil und erster Zusatzbezeichnerteil.

In dem Beispiel gemäß der Figur 4 tritt der Zusatzbezeichner als Prefix zum herkömmlichen Objektbezeichner auf. Denkbar wäre aber auch, dass der Zusatzbezeichner als Suffix zum herkömmlichen Objektbezeichner erscheint.

Gemäß einer anderen Ausbildung des Verfahrens (vgl. Figur 7) gibt das Schema vor, dass wenn der alternative Objektbezeichner BiasedNodeID, dessen Referenzen zu ermitteln sind, vom Bezeichnertyp NUMERIC ist, als Teilungskriterium ein Basiswert Base verwendet wird und der alternative Objektbezeichner durch den Basiswert dividiert wird, wobei der Ganzzahlquotient dieser Division nach erneuter Multiplikation mit dem Basiswert Base als Zusatzbezeichner Bias und der Rest dieser Division als herkömmlicher Objektbezeichner NodeID weiterverarbeitet wird. In der Figur 7 ist die erneute Multiplikation des Ganzzahlquotienten mit dem Basiswert Base nicht gezeigt. Der Ganzzahlquotient an sich, entspricht dem Index y der Dimension bzw. des Informationsmodells.

Weiterhin gibt das Schema vor, dass für jede ermittelte Referenz ForwardReferences der alternative Objektbezeichner BiasedForwardReferences ebenfalls vom Bezeichnertyp NUMERIC ist und durch Addieren des Zusatzbezeichners Bias und des herkömmlichen Objektbezeichners des jeweiligen zugeordneten anderen Objekts gebildet wird.

Auch wenn das Verfahren gemäß der Figuren 4 und 7 für das Ermitteln von Vorwärtsreferenzen dargestellt und beschrieben ist, kann dieses ebenfalls für das Ermitteln von Rückwärtsreferenzen genutzt werden.

### Bezugszeichenliste

- K: OPC-UA-basierende Kommunikationsumgebung
- S1, S2: Server, OPC-UA-Server
- C1, C2: Client, OPC-UA-Client
- N: Netzwerk

## Patentansprüche

1. Verfahren zum Bilden alternativer Objektbezeichner für Objekte eines Adressraums eines Servers (S1, S2) innerhalb einer OPC-UA-basierenden Kommunikationsumgebung (K),
wobei jedes Objekt des Adressraums des Servers (S1, S2) durch einen herkömmlichen Objektbezeichner eindeutig bezeichnet ist,
umfassend die Schritte:
Speichern eines Zusatzbezeichners in einem Verzeichnis der für diesen Adressraum des Servers (S1, S2) definierten Zusatzbezeichner,
und wobei durch Kombination des Zusatzbezeichners mit dem herkömmlichen Objektbezeichner des jeweiligen Objekts nach einem Schema für jedes Objekt des Adressraums des Servers (S1, S2) ein das Objekt ebenfalls eindeutig bezeichnender alternativer Objektbezeichner gebildet wird, wobei es sich bei den Objektbezeichnern um Knotenbezeichner, NodeIDs, handelt, die sich aus den drei Elementen Namensraumindex, namespaceIndex, sowie Bezeichnertyp, identifierType, und Bezeichner, identifier, zusammensetzen,
wobei das Schema vorgibt, dass wenn der herkömmliche Objektbezeichner vom Bezeichnertyp STRING ist, der Zusatzbezeichner ebenfalls vom Bezeichnertyp STRING ist und zwei Zusatzbezeichnerteile umfasst, wobei der erste Zusatzbezeichnerteil eine frei definierbare Zeichenkette ist und der zweite Zusatzbezeichnerteil ein frei definierbares Separatorzeichen ist, wobei der alternative Objektbezeichner ebenfalls vom Bezeichnertyp STRING ist und dessen Bezeichner aus den drei Teilen erster Zusatzbezeichnerteil, zweiter Zusatzbezeichnerteil und Bezeichner des herkömmlichen Objektbezeichners des jeweiligen Objekts in dieser oder umgekehrter Kombinationsreihenfolge gebildet wird,
oder
wobei das Schema vorgibt, dass wenn der herkömmliche Objektbezeichner vom Bezeichnertyp NUMERIC ist, der Zusatzbezeichner ebenfalls vom Bezeichnertyp NUMERIC und ein Vielfaches eines Basiswertes ist,
wobei der Basiswert größer ist als der um 1 erhöhte größte numerische Wert unter allen herkömmlichen Objektbezeichnern der Objekte des Adressraums des Servers (S1, S2), wobei der alternative Objektbezeichner ebenfalls vom Bezeichnertyp NUMERIC ist und dessen Bezeichner durch Addieren des Zusatzbezeichners und des Bezeichners des herkömmlichen Objektbezeichners des jeweiligen Objekts gebildet wird.

2. Verfahren zum Validieren eines alternativen Objektbezeichners innerhalb einer OPC-UA-basierenden Kommunikationsumgebung (K),
wobei jedes Objekt eines Adressraums eines Servers (S1, S2) durch einen herkömmlichen Objektbezeichner eindeutig bezeichnet ist und zusätzlich durch wenigstens einen alternativen Objektbezeichner eindeutig bezeichnet ist, wobei es sich bei den Objektbezeichnern um Knotenbezeichner, NodeIDs, handelt, die sich aus den drei Elementen Namensraumindex, namespaceIndex, sowie Bezeichnertyp, identifierType, und Bezeichner, identifier, zusammensetzen,
wobei das Verfahren durch einen OPC-UA-Server ausgeführt wird,
umfassend die Schritte:
- Entnehmen eines alternativen Objektbezeichners aus einer Anfrage eines Clients (C1, C2),
- Teilen des Elements "Bezeichner" des alternativen Objektbezeichners nach einem Schema unter Anwendung eines Teilungskriteriums, so dass anschließend ein herkömmlicher Objektbezeichner und ein Zusatzbezeichner vorliegen,
- Beurteilen des herkömmlichen Objektbezeichners als valide, wenn er in einem Verzeichnis der in diesem Adressraum des Servers (S1, S2) vorhandenen herkömmlichen Objektbezeichner ermittelt werden kann,
- Beurteilen des Zusatzbezeichners als valide, wenn er in einem Verzeichnis der für diesen Adressraum des Servers (S1, S2) definierten Zusatzbezeichner ermittelt werden kann,
- Beurteilen des alternativen Objektbezeichners als valide, wenn zuvor sowohl der herkömmliche Objektbezeichner als auch der Zusatzbezeichner als valide beurteilt wurden,
- Beurteilen des alternativen Objektbezeichners als nicht valide, wenn zuvor der herkömmliche Objektbezeichner und/oder der Zusatzbezeichner als nicht valide beurteilt wurden,
wobei das Schema vorgibt, dass wenn der alternative Objektbezeichners vom Bezeichnertyp STRING ist, als Teilungskriterium ein Separatorzeichen verwendet wird und das Separatorzeichen innerhalb der gesamten Zeichenkette des alternativen Objektbezeichners als zweiter Zusatzbezeichnerteil identifiziert wird,
und wobei der Teil der Zeichenkette vor dem Separatorzeichen als erster Zusatzbezeichnerteil und der Teil der Zeichenkette nach dem Separatorzeichen als Bezeichner des herkömmlichen Objektbezeichners identifiziert und weiterverarbeitet wird oder der Teil der Zeichenkette vor dem Separatorzeichen als Bezeichner des herkömmlichen Objektbezeichners und der Teil der Zeichenkette nach dem Separatorzeichen als erster Zusatzbezeichnerteil identifiziert und weiterverarbeitet wird,
oder,
wobei das Schema vorgibt, dass wenn der Bezeichnertyp des alternativen Objektbezeichners NUMERIC ist, als Teilungskriterium ein Basiswert verwendet wird und der Bezeichner des alternativen Objektbezeichners durch den Basiswert dividiert wird, wobei der Ganzzahlquotient dieser Division, insbesondere nach erneuter Multiplikation mit dem Basiswert Base, als Zusatzbezeichner und der Rest dieser Division als Bezeichner des herkömmlichen Objektbezeichners identifiziert und weiterverarbeitet wird.

3. Verfahren zum Ermitteln von Referenzen eines alternativen Objektbezeichners innerhalb einer OPC-UA-basierenden Kommunikationsumgebung (K),
wobei jedes Objekt eines Adressraums eines Servers (S1, S2) durch einen herkömmlichen Objektbezeichner eindeutig bezeichnet ist und zusätzlich durch wenigstens einen alternativen Objektbezeichner eindeutig bezeichnet ist, es sich bei den Objektbezeichnern um Knotenbezeichner, NodeIDs, handelt, die sich aus den drei Elementen Namensraumindex, namespaceIndex, sowie Bezeichnertyp, identifierType, und Bezeichner, identifier, zusammensetzen,
wobei das Verfahren durch einen OPC-UA-Server ausgeführt wird,
umfassend die Schritte:
- Entnehmen eines alternativen Objektbezeichners aus einer Anfrage eines Clients (C1, C2),
- Teilen des Elements "Bezeichner" des alternativen Objektbezeichners nach einem Schema unter Anwendung eines Teilungskriteriums, so dass anschließend ein herkömmlicher Objektbezeichner und ein Zusatzbezeichner vorliegen, wobei der Zusatzbezeichner in einem Verzeichnis der für diesen Adressraum des Servers (S1, S2) definierten Zusatzbezeichner gespeichert wird,
- Ermitteln der dem herkömmlichen Objektbezeichner zugeordneten Referenzen in einem Verzeichnis der in diesem Adressraum des Servers (S1, S2) vorhandenen Referenzen, wobei jede Referenz einen herkömmlichen Objektbezeichner eines zugeordneten anderes Objekts umfasst,
- für jede ermittelte Referenz Bilden eines alternativen Objektbezeichners durch Kombinieren des Zusatzbezeichners mit dem von der Referenz umfassten herkömmlichen Objektbezeichner des zugeordneten anderen Objekts nach diesem Schema,
wobei das Schema vorgibt, dass wenn der Bezeichnertyp des alternativen Objektbezeichners, dessen Referenzen zu ermitteln sind, STRING ist, als Teilungskriterium ein Separatorzeichen verwendet wird und das Separatorzeichen innerhalb der Zeichenkette des alternativen Objektbezeichners als zweiter Zusatzbezeichnerteil identifiziert wird,
und wobei der Teil der Zeichenkette vor dem Separatorzeichen als erster Zusatzbezeichnerteil und der Teil der Zeichenkette nach dem Separatorzeichen als Bezeichner des herkömmlichen Objektbezeichners identifiziert und weiterverarbeitet wird
oder der Teil der Zeichenkette vor dem Separatorzeichen als Bezeichner des herkömmlichen Objektbezeichners und der Teil der Zeichenkette nach dem Separatorzeichen als erster Zusatzbezeichnerteil identifiziert und weiterverarbeitet wird,
wobei das Schema vorgibt, dass, wenn der Bezeichnertyp des alternativen Objektbezeichners, dessen Referenzen zu ermitteln sind, STRING ist, für jede ermittelte Referenz der Bezeichnertyp des alternativen Objektbezeichners ebenfalls vom Bezeichnertyp STRING ist und dessen Bezeichner aus drei Teilen gebildet wird
und zwar in der Reihenfolge erster Zusatzbezeichnerteil, zweiter Zusatzbezeichnerteil und Bezeichner des herkömmlichen Objektbezeichners des jeweiligen zugeordneten anderen Objekts
oder in der Reihenfolge Bezeichner des herkömmlichen Objektbezeichners des jeweiligen zugeordneten anderen Objekts, zweiter Zusatzbezeichnerteil und erster Zusatzbezeichnerteil,
wobei das Schema vorgibt, dass wenn der Bezeichnertyp des alternativen Objektbezeichners, dessen Referenzen zu ermitteln sind, NUMERIC ist, als Teilungskriterium ein Basiswert verwendet wird und der Bezeichner des alternativen Objektbezeichners durch den Basiswert dividiert wird, wobei der Ganzzahlquotient dieser Division, insbesondere nach erneuter Multiplikation mit dem Basiswert Base, als Zusatzbezeichner und der Rest dieser Division als Bezeichner des herkömmlichen Objektbezeichner weiterverarbeitet wird,
wobei das Schema vorgibt, dass, wenn der Bezeichnertyp des alternatives Objektbezeichners, dessen Referenzen zu ermitteln sind, NUMERIC ist, für jede ermittelte Referenz der Bezeichnertyp des alternativen Objektbezeichners ebenfalls vom Bezeichnertyp NUMERIC ist und dessen Bezeichner durch Addieren des Zusatzbezeichners und des Bezeichners des herkömmlichen Objektbezeichners des jeweiligen zugeordneten anderen Objekts gebildet wird.

4. Server (S1, S1) ausgebildet zur Durchführung des Verfahrens nach einem der Ansprüche 1 bis 3.

5. System umfassend eine OPC-UA-basierende Kommunikationsumgebung (K) mit wenigstens einem Server (S1, S1) nach Anspruch 4 und wenigstens einem Client (C1, C2), die über ein Netzwerk (N) miteinander verbunden sind.

6. Computerprogrammprodukt, umfassend Anweisungen, die bei Ausführung durch einen Computer, diesen veranlassen, das Verfahren nach einem der Ansprüche 1 bis 3 auszuführen.

## Claims

1. Method for providing alternative object identifiers for objects of an address space of a server (S1, S2) within an OPC UA based communication environment (K),
wherein each object of the address space of the server (S1, S2) is uniquely identified by a conventional object identifier,
comprising the steps of:
storing an additional identifier in a directory of the additional identifiers defined for this address space of the server (S1, S2),
and wherein, by combining the additional identifier with the conventional object identifier of the respective object, an alternative object identifier which also uniquely identifies the object is formed for each object of the address space of the server (S1, S2) according to a scheme, wherein the object identifiers are node identifiers, NodeIDs, which are composed of the three elements namespace index, namespacelndex, and identifier type, identifierType, and identifier, identifier wherein the schema specifies that if the conventional object identifier is of identifier type STRING, the additional identifier is also of identifier type STRING and comprises two additional identifier parts, wherein the first additional identifier part is a freely definable character string and the second additional identifier part is a freely definable separator character, wherein the alternative object identifier is also of the STRING identifier type and its identifier is formed from the three parts first additional identifier part, second additional identifier part and identifier of the conventional object identifier of the respective object in this or reverse combination sequence,
or
wherein the scheme specifies that if the conventional object identifier is of identifier type NUMERIC, the additional identifier is also of identifier type NUMERIC and is a multiple of a base value,
wherein the base value is greater than the largest numerical value increased by 1 among all conventional object identifiers of the objects of the address space of the server (S1, S2), wherein the alternative object identifier is also of the NUMERIC identifier type and its identifier is formed by adding the additional identifier and the identifier of the conventional object identifier of the respective object.

2. Method for validating an alternative object identifier within an OPC UA based communication environment (K),
wherein each object of an address space of a server (S1, S2) is uniquely identified by a conventional object identifier and is additionally uniquely identified by at least one alternative object identifier, wherein the object identifiers are node identifiers, NodeIDs, which are composed of the three elements namespace index, namespacelndex, as well as identifier type, identifierType, and identifier, identifier,
wherein the method is executed by an OPC UA server,
comprising the steps of:
- extracting an alternative object identifier from a request from a client (C1, C2),
- dividing the element "identifier" of the alternative object identifier according to a scheme using a splitting criterion, such that a conventional object identifier and an additional object identifier are subsequently present,
- evaluating that the conventional object identifier is valid, if it can be identified in a directory of the conventional object identifiers present in this address space of the server (S1, S2),
- evaluating that the additional identifier is valid, if it can be identified in a directory of the additional identifiers defined for this address space of the server (S1, S2),
- evaluating that the alternative object identifier is valid, if both the conventional object identifier and the additional identifier were previously evaluated to be valid,
- evaluating that the alternative object identifier is not valid if the conventional object identifier and/or the additional identifier were previously evaluated to not be valid,
wherein the scheme specifies that if the alternative object identifier is of identifier type STRING, a separator character is used as a splitting criterion and the separator character is identified as the second additional identifier part within the entire character string of the alternative object identifier,
and wherein the part of the character string before the separator character is identified and further processed as the first additional identifier part and the part of the character string after the separator character is identified and further processed as the identifier of the conventional object identifier, or the part of the character string before the separator character is identified and further processed as the identifier of the conventional object identifier and the part of the character string after the separator character is identified and further processed as the first additional identifier part,
or,
wherein the scheme specifies that if the identifier type of the alternative object identifier is NUMERIC, a base value is used as the splitting criterion and the identifier of the alternative object identifier is divided by the base value, the integer quotient of this division, in particular after renewed multiplication by the base value Base, being identified and further processed as the additional identifier and the remainder of this division being identified and further processed as the identifier of the conventional object identifier.

3. Method for determining references of an alternative object identifier within an OPC UA based communication environment (K),
wherein each object of an address space of a server (S1, S2) is uniquely identified by a conventional object identifier and is additionally uniquely identified by at least one alternative object identifier, the object identifiers are node identifiers, NodeIDs, which are composed of the three elements namespace index, namespacelndex, and identifier type, identifierType, and identifier, identifier,
wherein the method is executed by an OPC-U A server,
comprising the steps of:
- extracting an alternative object identifier from a request from a client (C1, C2),
- dividing the element "identifier" of the alternative object identifier according to a scheme using a splitting criterion, such that a conventional object identifier and an additional object identifier are subsequently present, the additional identifier being stored in a directory of the additional identifiers defined for this address space of the server (S1, S2),
- determining the references associated with the conventional object identifier in a directory of the references present in this address space of the server (S1, S2), wherein each reference comprises a conventional object identifier of an associated other object,
- for each determined reference, forming of an alternative object identifier by combining the additional identifier with the conventional object identifier of the associated other object comprised by the reference according to this scheme
wherein the scheme specifies that if the identifier type of the alternative object identifier whose references are to be determined is STRING, a separator character is used as a splitting criterion and the separator character is identified within the character string of the alternative object identifier as the second additional identifier part,
- and wherein the part of the character string before the separator character is identified and processed as the first additional identifier part and the part of the character string after the separator character is identified and processed as the identifier of the conventional object identifier,
- or the part of the character string before the separator character is identified and further processed as the identifier of the conventional object identifier and the part of the character string after the separator character is identified and further processed as the first additional identifier part,
wherein the scheme specifies that, if the identifier type of the alternative object identifier whose references are to be determined is STRING, for each determined reference the identifier type of the alternative object identifier is also of identifier type STRING and its identifier is formed from three parts
in the order first additional identifier part, second additional identifier part and identifier of the conventional object identifier of the respective assigned other object or in the order identifier of the conventional object identifier of the respective assigned other object, second additional identifier part and first additional identifier part,.
wherein the scheme specifies that if the identifier type of the alternative object identifier whose references are to be determined is NUMERIC, a base value is used as the splitting criterion and the identifier of the alternative object identifier is divided by the base value, the integer quotient of this division, in particular after renewed multiplication by the base value Base, being further processed as the additional identifier and the remainder of this division being further processed as the identifier of the conventional object identifier,
- wherein the scheme specifies that, if the identifier type of the alternative object identifier whose references are to be determined is NUMERIC, for each determined reference the identifier type of the alternative object identifier is also of the identifier type NUMERIC and its identifier is formed by adding the additional identifier and the identifier of the conventional object identifier of the respective assigned other object.

4. Server (S1, S1) configured to perform the method according to any one of claims 1 to 3.

5. System comprising an OPC UA based communication environment (K) with at least one server (S1, S1) according to claim 4 and at least one client (C1, C2) which are interconnected via a network (N).

6. A computer program product comprising instructions which, when executed by a computer, cause the computer to perform the method of any one of claims 1 to 3.

## Revendications

1. Procédé permettant d'obtenir des identificateurs d'objet alternatifs pour des objets d'un espace d'adressage d'un serveur (S1, S2) dans un environnement de communication basé sur OPC - UA (K),
dans lequel chaque objet de l'espace d'adressage du serveur (S1, S2) est identifié de manière unique à l'aide d'un identificateur d'objet conventionnel,
comprenant les étapes suivantes :
la mémorisation d'un identificateur supplémentaire dans un répertoire des identificateurs supplémentaires déterminés pour ledit espace d'adressage du serveur (S1, S2),
et dans lequel par combinaison de l'identificateur supplémentaire avec l'identificateur d'objet conventionnel de l'objet respectif selon un schéma pour chaque objet de l'espace d'adressage du serveur (S1, S2), un identificateur d'objet alternatif est obtenu, lequel identifie également de manière unique l'objet, dans lequel les identificateurs d'objet sont des identificateurs de nœud, NodeID, lesquels sont composés des trois éléments, d'un index d'espace de nom, namespaceIndex, ainsi que d'un type d'identificateur, identifierType, et d'un identificateur, identifier,
dans lequel le schéma détermine que, lorsque l'identificateur d'objet conventionnel est de type identificateur STRING, l'identificateur supplémentaire est également de type identificateur STRING et comprend deux fractions d'identificateur supplémentaires, dans lequel la première fraction d'identificateur supplémentaire est une chaîne de caractères librement identifiable et la deuxième fraction d'identificateur supplémentaire est un caractère séparateur librement identifiable, dans lequel l'identificateur d'objet alternatif est également de type identificateur STRING et son identificateur est obtenu à partir des trois fractions, de la première fraction d'identificateur supplémentaire, de la deuxième fraction d'identificateur supplémentaire et de l'identificateur de l'identificateur d'objet conventionnel de l'objet respectif dans cet ordre de combinaison ou dans l'ordre inverse, ou
dans lequel le schéma détermine que, lorsque l'identificateur d'objet conventionnel est de type NUMERIC, l'identificateur supplémentaire est également de type NUMERIC et est un multiple d'une valeur de base,
dans lequel la valeur de base est supérieure à la plus grande valeur numérique augmentée de 1 parmi tous les identificateurs d'objet conventionnels des objets dans l'espace d'adressage du serveur (S1, S2), dans lequel l'identificateur d'objet alternatif est également du type identificateur NUMERIC et son identificateur est obtenu par ajout de l'identificateur supplémentaire et de l'identificateur de l'identificateur d'objet conventionnel de l'objet respectif.

2. Procédé de validation d'un identificateur d'objet alternatif dans un environnement de communication basé sur OPC - UA (K),
dans lequel chaque objet d'un espace d'adressage d'un serveur (S1, S2) est identifié de manière unique à l'aide d'un identificateur d'objet conventionnel et est en outre identifié de manière unique par au moins un identificateur d'objet alternatif, dans lequel les identificateurs d'objet sont des identificateurs de nœud, NodeID, lesquels sont composés des trois éléments, d'un index d'espace de nom, namespaceIndex, ainsi que d'un type d'identificateur, identifierType, et d'un identificateur, identifier,
dans lequel le procédé est mis en œuvre par un serveur OPC - UA,
comprenant les étapes suivantes :
- l'extraction d'un identificateur d'objet alternatif à partir d'une demande d'un client (C1, C2),
- le fractionnement de l'élément « identificateur » de l'identificateur d'objet alternatif selon un schéma reposant sur l'utilisation d'un critère de fractionnement de telle sorte qu'ensuite un identificateur d'objet conventionnel et un identificateur supplémentaire soient présents,
- l'évaluation de l'identificateur d'objet conventionnel comme valide lorsqu'il peut être déterminé dans un répertoire des identificateurs d'objet conventionnels présents dans ledit espace d'adressage du serveur (S1, S2),
- l'évaluation de l'identificateur supplémentaire comme valide lorsqu'il peut être déterminé dans un répertoire des identificateurs supplémentaires déterminés pour ledit espace d'adressage du serveur (S1, S2),
- l'évaluation de l'identificateur d'objet alternatif comme valide lorsque l'identificateur d'objet conventionnel et l'identificateur supplémentaire ont été précédemment évalués comme valides,
- l'évaluation de l'identificateur d'objet alternatif comme invalide lorsque l'identificateur d'objet conventionnel et/ou l'identificateur supplémentaire ont été précédemment évalués comme invalides,
dans lequel le schéma détermine que lorsque l'identificateur d'objet alternatif est de type identificateur STRING, un caractère séparateur est utilisé comme critère de fractionnement et le caractère séparateur est identifié comme la deuxième fraction d'identificateur supplémentaire dans la chaîne de caractères entière de l'identificateur d'objet alternatif, et dans lequel la fraction de la chaîne de caractères avant le caractère séparateur est identifiée comme la première fraction d'identificateur supplémentaire et la fraction de la chaîne de caractères après le caractère séparateur est identifié et traité ultérieurement, ou la fraction de la chaîne de caractères avant le caractère séparateur est identifiée comme l'identificateur de l'identificateur d'objet conventionnel et la fraction de la chaîne de caractères après le caractère séparateur est identifiée et traitée ultérieurement,
ou,
dans lequel le schéma détermine que lorsque le type d'identificateur de l'identificateur d'objet alternatif est NUMERIC, une valeur de base est utilisée comme critère de fractionnement et l'identificateur de l'identificateur d'objet alternatif est divisé par la valeur de base, dans lequel le quotient entier de ladite division, en particulier après une multiplication supplémentaire à l'aide de la valeur de base Base, est identifié et traité ultérieurement comme identificateur supplémentaire et le reste de ladite division comme identificateur de l'identificateur d'objet conventionnel.

3. Procédé de détermination des références d'un identificateur d'objet alternatif dans un environnement de communication basé sur OPC - UA (K),
dans lequel chaque objet d'un espace d'adressage d'un serveur (S1, S2) est identifié de manière unique à l'aide d'un identificateur d'objet conventionnel et est en outre identifié de manière unique par au moins un identificateur d'objet alternatif, les identificateurs d'objet étant des identificateurs de nœud, NodeID, lesquels sont composés des trois éléments, d'un index d'espace de nom, namespaceIndex, ainsi que d'un type d'identificateur, identifierType, et d'un identificateur, identifier,
dans lequel le procédé est mis en œuvre par un serveur OPC - UA,
comprenant les étapes suivantes :
- l'extraction d'un identificateur d'objet alternatif à partir d'une demande d'un client (C1, C2),
- le fractionnement de l'élément « identificateur » de l'identificateur d'objet alternatif selon un schéma reposant sur l'utilisation d'un critère de fractionnement de telle sorte qu'ensuite un identificateur d'objet conventionnel et un identificateur supplémentaire soient présents, dans lequel l'identificateur supplémentaire est mémorisé dans un répertoire des identificateurs supplémentaires identifiés pour ledit espace d'adressage du serveur (S1, S2),
- la détermination des références associées à l'identificateur d'objet conventionnel dans un répertoire des références présentes dans ledit espace d'adressage du serveur (S1, S2), dans lequel chaque référence comprend un identificateur d'objet conventionnel d'un autre objet associé,
- l'obtention, pour chaque référence déterminée, d'un identificateur d'objet alternatif par combinaison de l'identificateur supplémentaire avec l'identificateur d'objet conventionnel de l'autre objet associé compris par la référence selon ledit schéma,
dans lequel le schéma détermine que lorsque le type d'identificateur de l'identificateur d'objet alternatif dont les références doivent être identifiées est STRING, un caractère séparateur est utilisé comme critère de fractionnement et le caractère séparateur est identifié dans la chaîne de caractères de l'identificateur d'objet alternatif comme la deuxième fraction d'identificateur supplémentaire,
et dans lequel la fraction de la chaîne de caractères avant le caractère séparateur est identifiée et traitée ultérieurement comme la première fraction d'identificateur supplémentaire et la fraction de la chaîne de caractères après le caractère séparateur est identifiée et traitée ultérieurement comme identificateur de l'identificateur d'objet conventionnel
ou la fraction de la chaîne de caractères avant le caractère séparateur est identifiée comme identificateur de l'identificateur d'objet conventionnel et la fraction de la chaîne de caractères après le caractère séparateur est identifiée et traitée ultérieurement comme la première fraction d'identificateur supplémentaire,
dans lequel le schéma détermine que, lorsque le type d'identificateur de l'identificateur d'objet alternatif dont les références doivent être identifiées est STRING, pour chaque référence identifiée le type d'identificateur de l'identificateur d'objet alternatif est également de type identificateur STRING et son identificateur est obtenu à partir des trois fractions
et à savoir dans l'ordre de la première fraction d'identificateur supplémentaire, de la deuxième fraction et de l'identificateur de l'identificateur de l'identificateur de l'objet conventionnel de l'autre objet associé respectif
ou dans l'ordre de l'identificateur de l'identificateur de l'objet conventionnel de l'autre objet associé respectif, de la deuxième fraction d'identificateur supplémentaire et de la première fraction d'identificateur supplémentaire,
dans lequel le schéma détermine que, lorsque le type d'identificateur de l'identificateur d'objet alternatif dont les références doivent être identifiées est NUMERIC, une valeur de base est utilisée comme critère de fractionnement et l'identificateur de l'identificateur d'objet alternatif est divisé par la valeur de base, dans lequel le quotient entier de ladite division, en particulier après une multiplication supplémentaire à l'aide de la valeur de base Base, est traité comme identificateur supplémentaire et le reste de ladite division comme identificateur de l'identificateur d'objet conventionnel,
dans lequel le schéma détermine que, lorsque le type d'identificateur de l'identificateur d'objet alternatif dont les références doivent être identifiées est NUMERIC, pour chaque référence déterminée le type d'identificateur de l'identificateur d'objet alternatif est également de type d'identificateur NUMERIC et son identificateur est obtenu par ajout de l'identificateur supplémentaire et de l'identificateur de l'identificateur d'objet conventionnel de l'autre objet associé respectif.

4. Serveur (S1, S1) conçu pour mettre en œuvre le procédé selon l'une quelconque des revendications 1 à 3.

5. Système comprenant un environnement de communication basé sur OPC - UA (K) comportant au moins un serveur (S1, S1) selon la revendication 4 et au moins un client (C1, C2), lesquels sont connectés l'un à l'autre par l'intermédiaire d'un réseau (N).

6. Produit programme informatique comprenant des instructions, lesquelles, lorsqu'elles sont exécutées par un ordinateur, amènent ledit ordinateur à mettre en œuvre le procédé selon l'une quelconque des revendications 1 à 3.
